# EUROPEAN PATENT APPLICATION

(11) **EP 4 386 642 A1**
(43) Date of publication of application: **19.06.2024**
(21) Application number: 23200443.2
(22) Date of filing: 28.09.2023
(51) Int. Cl.: G06Q 10/0635, G06Q 10/10

(54) **ARTIFICIAL INTELLIGENCE (AI) SYSTEM CHECK PROGRAM, AI SYSTEM CHECK METHOD, AND INFORMATION PROCESSING DEVICE**

(30) Priority: 13.12.2022 JP 2022198909
(71) Applicant: Fujitsu Limited, Kawasaki-shi, Kanagawa 211-8588 (JP)
(72) Inventor: Ohashi, Kyoko, Kawasaki-shi, Kanagawa 211-8588 (JP); Nitta, Izumi, Kawasaki-shi, Kanagawa 211-8588 (JP)
(74) Representative: Hoffmann Eitle

(57) **Abstract**

An artificial intelligence (AI) system check program comprising instructions which when executed by a computer, cause the computer to execute processing including: specifying a first plurality of sets of stakeholders that have relationships with each other, based on a configuration of the stakeholders of an AI system; comparing the first plurality of sets with a second plurality of sets of stakeholders determined based on the configuration of the stakeholders of another AI system; and outputting a first set included in the first plurality of sets but not included in the second plurality of sets, as difference information, based on a result of the comparing.

## Description

### FIELD

The embodiments discussed herein are related to an AI system check program, an AI system check method, and an information processing device.

### BACKGROUND

In artificial intelligence (AI) systems, ethical risk assessments are sometimes performed.

Use of AI systems for various types of industry and tasks sometimes causes ethical issues. If such an issue arises, it will have a great impact not only on companies or organizations that provided the AI system, but also on users of the AI system and society beyond.

Therefore, in social implementation of AI, efforts are being made so as to enable to recognize and deal with ethical risks.

However, as AI systems have a plurality of stakeholders and social circumstances surrounding the stakeholders change, it may not be easy in some cases to perceive what ethical issues may arise from the use of AI systems.

Therefore, the very checklists presented by principles and guidelines regarding AI ethics are sometimes applied to the AI systems and their stakeholders and analyzed.

Examples of the principles and guidelines regarding AI ethics include: "European High-Level Expert Group on AI (AI HLEG) "Ethics Guidelines for Trustworthy AI""; "Ministry of Internal Affairs and Communications AI Utilization Guidelines"; "Integrated Innovation Strategy Promotion Council "Human-centered AI Social Principles""; and "OECD "Recommendation of the Council on Artificial Intelligence"".

In addition, "Risk Chain Model (RCModel)" have been proposed as models helpful for AI service providers to examine risk control relating to their own AI services in accord with the existence of various forms of AI service provision.

In a risk chain model, risk constituent elements are organized and structured according to (1) to (3) below.

### Technical constituent elements of AI system

(2) Constituent elements relating to service provider's code of conduct (including communication with users)
(3) Constituent elements relating to user understanding, behavior, and usage environment

In addition, in the risk chain model, identification of risk scenarios and specification of constituent elements that become risk factors, and visualization of risk chains and examination of risk control are performed. In the visualization of risk chains and the examination of risk control, the AI service providers become able to examine stepwise risk reduction by visualizing relationships (risk chains) of the constituent elements related to the risk scenarios.

Examples of the related art include: International Publication Pamphlet No. WO 2021/1 99201; U.S. Patent No. 11,270,214; U.S. Patent Publication No. 2019/0130643 are disclosed as related ar t; and Matsumoto, Takashi, Ema, Arisa, "Proposal of risk chain model to examine risk reduction of AI servi ces; June 4, 2020, the Internet <URL: ifi.u-tokyo.ac.jp/wp/wp-content/uploads/2020/06/policy_reco mmendation tg_20200604.pdf> is also disclosed as related art.

### SUMMARY

### TECHNICAL PROBLEM

However, the checklists presented by the principles and guidelines do not specifically indicate what part of the AI system is supposed to be how, and AI system developers or providers have to materialize the checklists. This materialization work is highly difficult and also imposes a large burden of person-hours.

In addition, although the risk constituent elements are organized in the risk chain models, the AI system providers and developers have to put the risk constituent elements into items supposed to be practiced for AI system components and individual stakeholders.

Furthermore, if there is an omission in the relationships between the AI system components and the stakeholders, there is a possibility that an omission may be produced in the check items to be generated. Meanwhile, if there is an undesired relationship between the AI system components and the stakeholders, there is a possibility that an excessive check item may be generated.

In one aspect, an object is to refine the accuracy and improve the efficiency in a risk analysis work by refining the accuracy of a system diagram of an AI system.

### SOLUTION TO PROBLEM

According to an aspect of the embodiments, there is provided an artificial intelligence (AI) system check program comprising instructions which when executed by a computer, cause the computer to execute processing including: specifying a first plurality of sets of stakeholders that have relationships with each other, based on a configuration of the stakeholders of an AI system; comparing the first plurality of sets with a second plurality of sets of stakeholders determined based on the configuration of the stakeholders of another AI system; and outputting a first set included in the first plurality of sets but not included in the second plurality of sets, as difference information, based on a result of the comparing.

### ADVANTAGEOUS EFFECTS OF INVENTION

In one aspect, the accuracy may be refined and the efficiency may be improved in a risk analysis work by refining the accuracy of a system diagram of an AI system.

### BRIEF DESCRIPTION OF DRAWINGS

FIG. 1 is a block diagram illustrating a system diagram of an AI system;
FIG. 2 is a diagram illustrating a part of an AI ethics model;
FIG. 3 is a table illustrating a part of an AI ethics checklist;
FIG. 4 is a block diagram schematically illustrating a software configuration example of an information processing device according to an embodiment;
FIG. 5 is a flowchart briefly explaining a characteristic difference detection process according to the embodiment;
FIG. 6 (i.e., FIGs.6A and 6B) is a table illustrating an analysis sheet according to the embodiment;
FIG. 7 is a table illustrating a use case outline according to the embodiment;
FIG. 8 is a block diagram illustrating a system diagram of an AI system including a writing omission according to the embodiment;
FIG. 9 is a diagram explaining a characteristic extraction process from the use case outline according to the embodiment;
FIG. 10 is a diagram explaining the characteristic extraction process from the analysis sheet according to the embodiment;
FIG. 11 is a diagram explaining an output process for a characteristic difference in the use case outline as the embodiment;
FIG. 12 is a diagram explaining an output process for a characteristic difference in the analysis sheet as the embodiment;
FIG. 13 is a flowchart explaining the characteristic extraction process in a stakeholder list as the embodiment;
FIG. 14 is a flowchart explaining the characteristic extraction process in the analysis sheet as the embodiment;
FIG. 15 is a diagram illustrating an output screen of a processing result according to the embodiment;
FIG. 16 is a flowchart explaining an output process for the stakeholder list according to the embodiment;
FIG. 17 is a block diagram illustrating a system diagram of an AI system including additional writing according to a first modification;
FIG. 18 (i.e., FIGs. 18A and 18B) is a table illustrating an analysis sheet according to the first modification;
FIG. 19 is a table illustrating a use case outline according to the first modification;
FIG. 20 is a diagram explaining an output process for a characteristic difference in the use case outline as the first modification;
FIG. 21 is a diagram explaining an output process for a characteristic difference in the analysis sheet as the first modification;
FIG. 22 is a diagram illustrating an output screen of a processing result according to the first modification;
FIG. 23 is a block diagram schematically illustrating a software configuration example of an information processing device according to a second modification; and
FIG. 24 is a block diagram schematically illustrating a hardware configuration example of the information processing device according to the embodiment and each of the modifications.

### DESCRIPTION OF EMBODIMENTS

### [A] Related Example

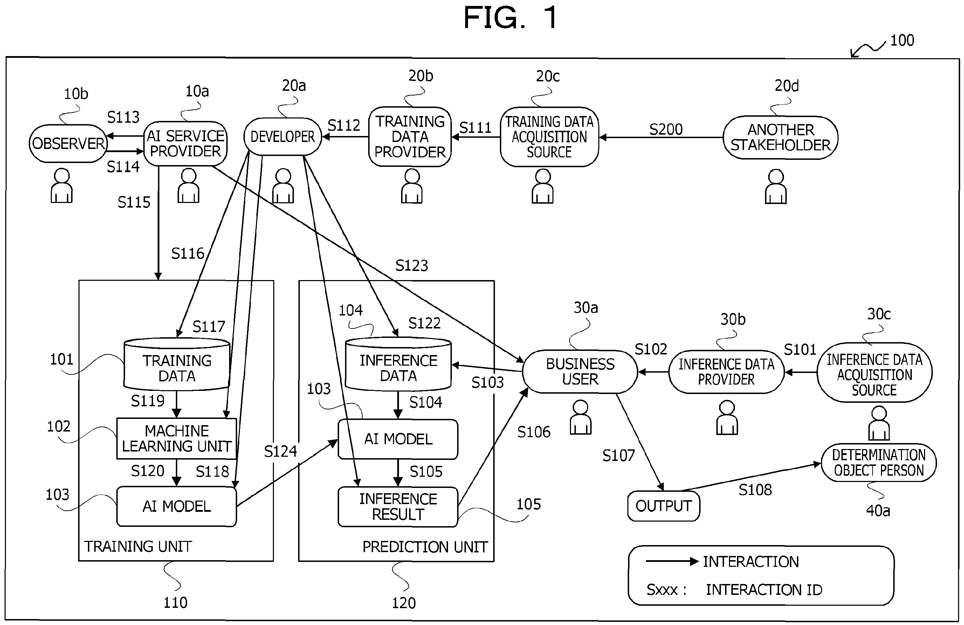

In a related example, ethical characteristics that an AI system 100 (to be described later with reference to FIG. 1) is supposed to have are made into a checklist in association with relationships between the AI system 100 and stakeholders, and ethical risks of the AI system 100 are analyzed using that AI ethics checklist. This may remove the work expected for an AI service provider 10a (to be described later with reference to FIG. 1) and a developer 20a to put the ethical characteristics into items supposed to be practiced for components of the AI system 100 and individual stakeholders.

In addition, the relationships between the constituent elements of the AI system 100 and the stakeholders are formed into a graph structure, and an AI ethics checklist in which AI ethics check items are prioritized based on characteristics of the graph structure is automatically generated. This may achieve improvement in efficiency by analyzing important AI ethics check items on a priority basis.

FIG. 1 is a block diagram illustrating a system diagram of the AI system 100.

In the AI system 100 illustrated in FIG. 1, an arrow indicates an interaction. Tow ends (start point and end point) of an interaction can be any elements of stakeholders, data, or components of the AI system 100. The type of the interaction is specified by roles (the AI service provider 10a, an observer 10b, the developer 20a, a training data provider 20b, a training data acquisition source 20c, another stakeholder 20d, a business user 30a, an inference data provider 30b, an inference data acquisition source 30c, or a determination object person 40a) of the elements corresponding to the start point and the end point of the interaction. Sxxx given to each interaction indicates an interaction identifier (ID).

The AI system 100 includes a training unit 110 and a prediction unit 120.

The training unit 110 includes a machine learning unit 102 that executes training of an AI model 103 by machine learning for training data 101. The training data 101 may be generated by an input of data from the developer 20a or the like.

A prediction unit 120 outputs an inference result 105 by inferring inference data 104 using the AI model 103. The inference data 104 may be generated by an input from the developer 20a or the business user 30a.

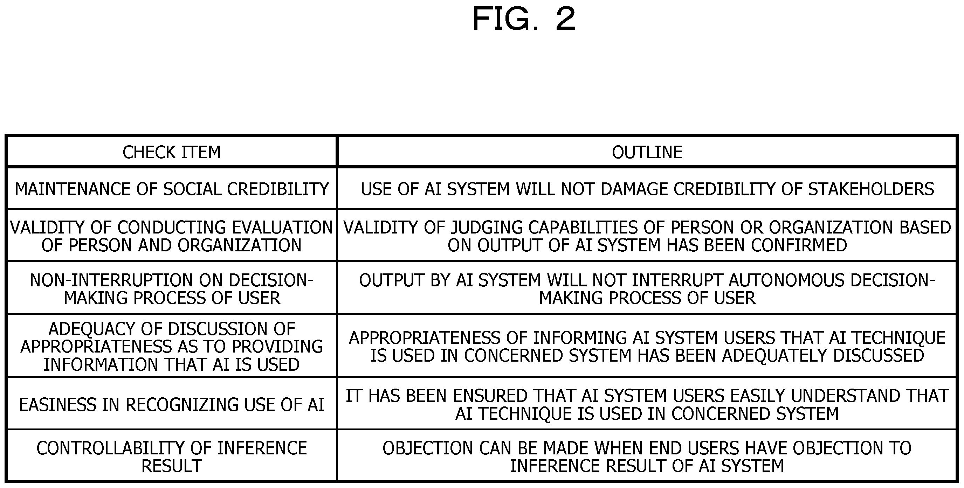

FIG. 2 is a diagram illustrating a part of an AI ethics model.

The AI ethics model illustrated in FIG. 2 is obtained by organizing principles, guidelines, and the like regarding AI ethics and configuring the organized principles, guidelines, and the like as a checklist that the AI system 100 is supposed to satisfy. The AI ethics model includes check items and outlines of the check items (a state that the AI system 100 is supposed to satisfy in order to be ethical).

In the example illustrated in FIG. 2, for example, the outline of the check item "maintenance of social credibility" has "use of the AI system will not damage the credibility of stakeholders".

The check items of the AI ethics model illustrated in FIG. 2 are based on the AI ethics model derived from "European High-Level Expert Group on AI (AI HLEG) "Ethics Guidelines for Trustworthy AI"".

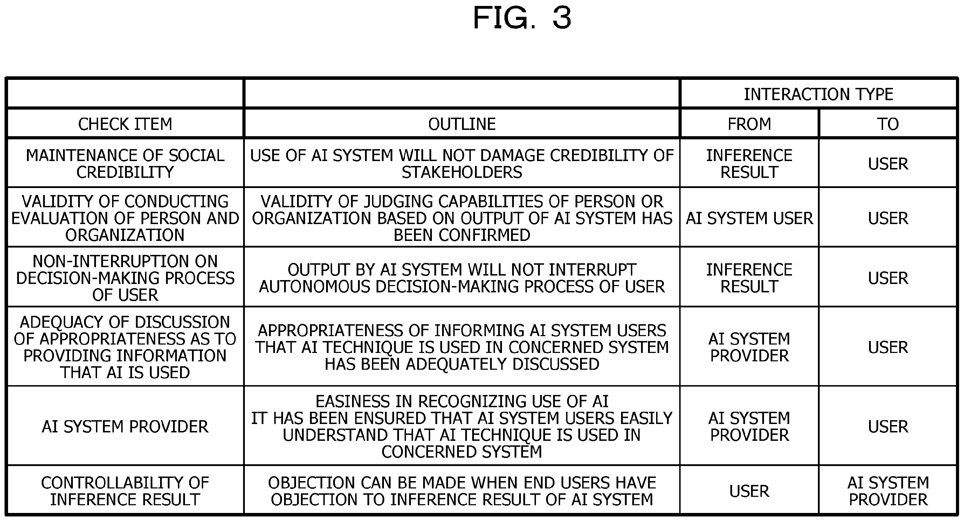

FIG. 3 is a table illustrating a part of an AI ethics checklist.

The AI ethics checklist is generated based on the AI ethics model. The AI ethics checklist associates AI ethics check items supposed to be satisfied, according to the type of interaction in FIG. 1. One check item in the AI ethics checklist corresponds to one type of interaction.

In the part of the AI ethics checklist illustrated in FIG. 3, the check item, the outline, the interaction type (From and To) are associated with each other. For example, the check item "maintenance of social credibility" is registered in association with the outline "use of the AI system will not damage the credibility of stakeholders", the interaction type (From) "inference result", and the interaction type (To) "user".

Here, an AI ethical risk analysis process according to the related example will be described.

Risk analysis is conducted by the user according to the following procedure from (1) to (4).

Relationships between the constituent elements of the AI system 100, data, and stakeholders are drawn as a system diagram (see FIG. 1), and interactions are extracted.

(2) Breakdown of each interaction is described in an analysis sheet (not illustrated).

(3) For each item of the AI ethics checklist (see FIG. 3), a risk (a risk event and a risk factor) presumed from a state in which the relevant interaction does not satisfy its check item is extracted and described in the analysis sheet.

(4) The risks in the analysis sheet are referred to, risks with the same contents are organized, and a relationship between an event and a factor is described. When visualized, an analysis diagram (not illustrated) is created by adding the risk event and factor to the system diagram.

That is, the system diagram, analysis sheet, and analysis diagram are output as output data.

In the above-described risk analysis procedure (3), there are many items in the AI ethics checklist, and thus the person-hours for verifying the entire checklist are large. Therefore, for the above-described risk analysis procedure (3), a generation process for an AI ethics checklist with priority is executed.

In the AI ethics checklist generation process, a relationship (interaction) between any two parties among the analysis object AI system 100 and the stakeholders is expressed in a graph structure. Then, relationships (interactions) with high importance to ethically pay attention to are extracted on a rule basis according to characteristics of the graph structure, and the check items for extracting ethical risks linked with the relationships (interactions) with high importance are presented as the checklist with priority.

An information processing device (not illustrated) according to the related example conducts narrowing down of the AI ethics checklist. In narrowing down the AI ethics checklist, characteristics that the "relationships between the configuration of the AI system and the stakeholders" have are expressed as the characteristics of the graph structure constituted by a set of interactions.

Since table data of the analysis sheet is in a data format of "interaction set", the graph structure can be automatically generated. For example, the following can be automatically extracted as the characteristics of the graph structure:
- The number of nodes of the stakeholders;
- The number of stakeholders having a plurality of roles; and
- The number of stakeholders who are not directly involved with the AI system.

The characteristics of the graph structure that are likely to cause ethical risks to arise and the items of the AI ethics checklist that are supposed to be taken into account are registered as rules in advance. For example, in a case where there is one or more stakeholders who are not directly involved with the AI system 100, the priority of the interaction involving with those stakeholders is raised. This is to grasp indirect impact on the stakeholders that tend to be overlooked in design and development of the AI system 100.

The AI ethics check items with high importance are narrowed down, based on the rules registered according to the characteristics of the graph structure, and are generated as the AI ethics checklist with priority.

### [B] Embodiment

Hereinafter, an embodiment will be described with reference to the drawings. Note that the embodiment to be described below is merely an example, and there is no intention to exclude application of various modifications and techniques not explicitly described in the embodiment. That is, the present embodiment can be variously modified and carried out in a range without departing from the spirit of the embodiment. In addition, each drawing is not intended to include only the constituent elements illustrated in the drawing and can include another function and the like.

In the related example described above, in the generation process for the AI ethics checklist, priority is assigned to the interaction according to the rule of the characteristics (such as characteristics regarding the roles of the stakeholders as an example) of the graph structure that are regarded as important interactions in which an ethical risk is likely to arise, and the AI ethics checklist is narrowed down.

Meanwhile, in the embodiment, overlooking of a risk may be avoided, and performing excessive extraction may also be made less possible for a system diagram in which the description contents are excessive or insufficient due to manual creation.

In the embodiment, several types of representative components included in the AI system 100 and templates that are representative examples of interactions are prepared in advance. Then, the creator of the system diagram is caused to choose a template of the system diagram of the AI system 100 closest to the analysis object, and the system diagram is created using the chosen template. The system diagram of the chosen template is compared with the system diagram created in the analysis object project, and a missing component or interaction is found and proposed as an object to be added to the system diagram.

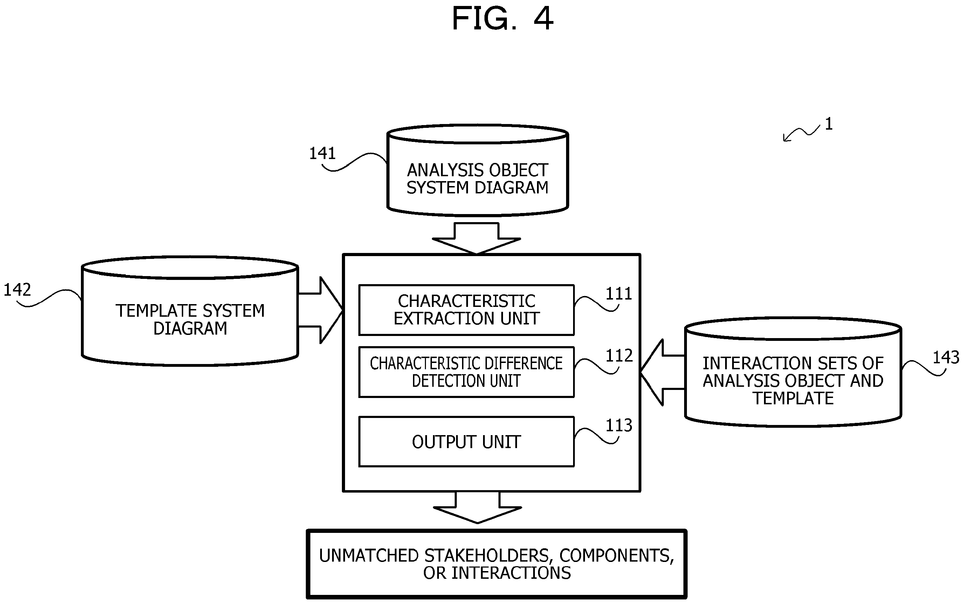

FIG. 4 is a block diagram schematically illustrating a software configuration example of an information processing device 1 according to the embodiment.

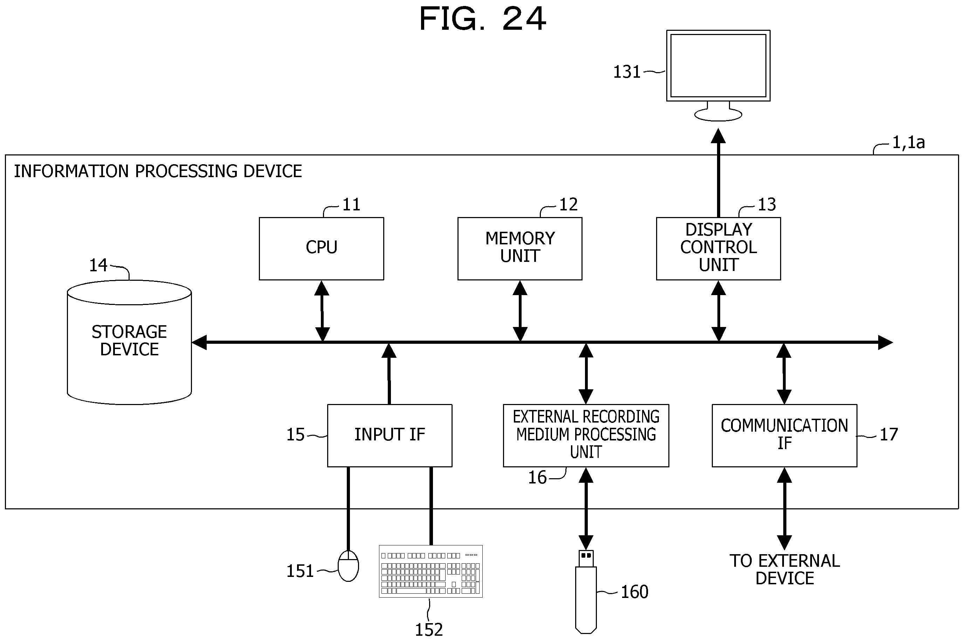

The information processing device 1 (to be described later with reference to FIG. 24) according to the embodiment functions as a characteristic extraction unit 111, a characteristic difference detection unit 112, and an output unit 113.

The characteristic extraction unit 111 extracts a characteristic point from an analysis object system diagram 141 and a template system diagram 142 and outputs the characteristic points as interaction sets 143 of the analysis object and the template.

The characteristic difference detection unit 112 detects a difference between the interaction of the analysis object and the interaction of the template from the interaction sets 143 of the analysis object and the template.

The output unit 113 outputs the detected difference as unmatched stakeholders, components, or interactions.

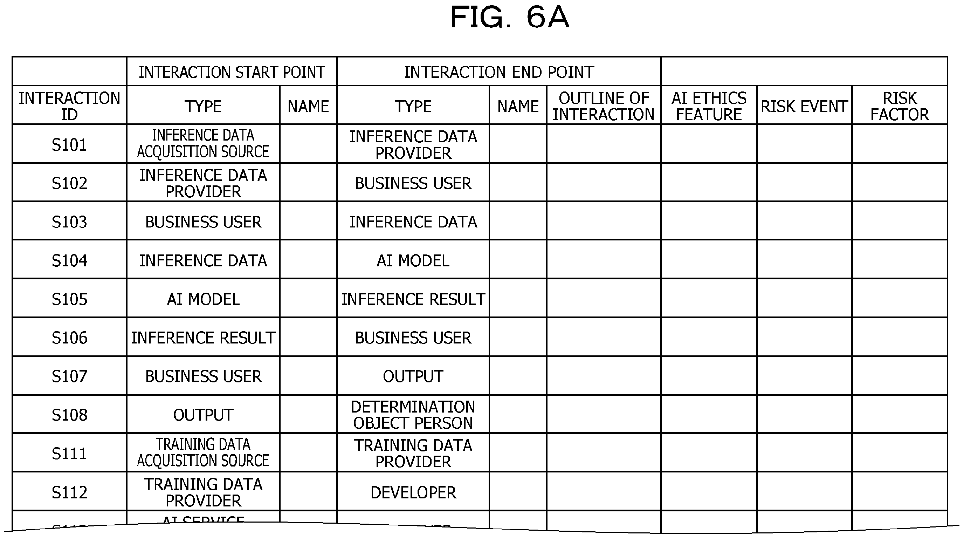

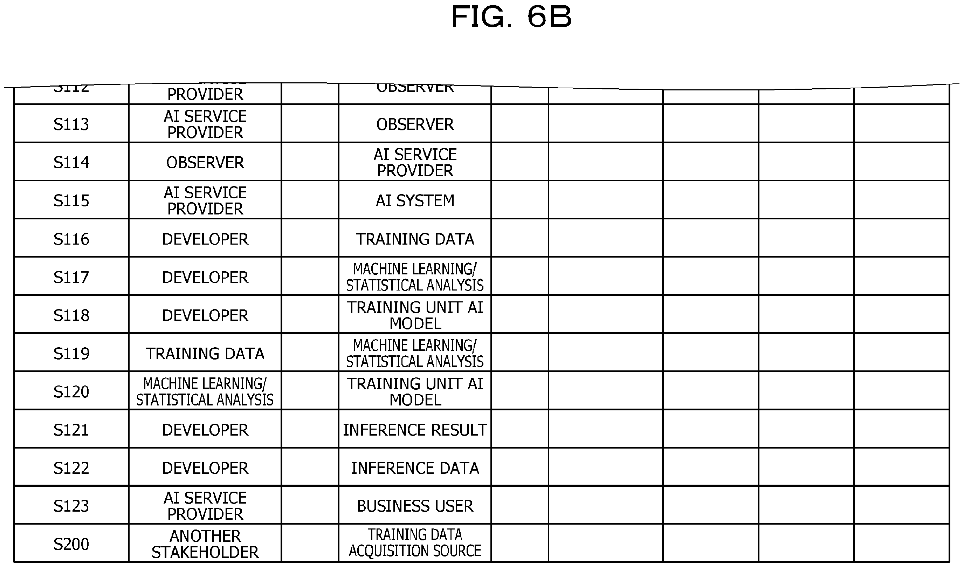

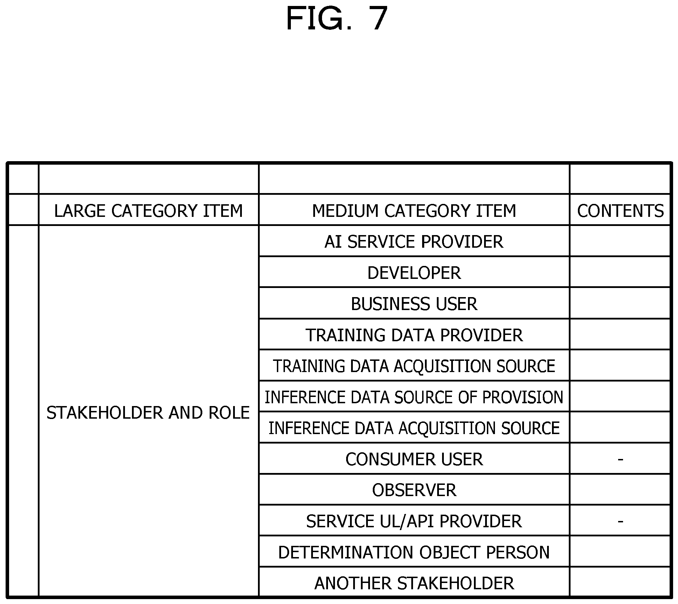

The interaction sets 143 of the analysis object and the template include an analysis sheet to be described later with reference to FIG. 6 and a use case outline to be described later with reference to FIG. 7 and are generated by extracting characteristics from the system diagram of the AI system 100 illustrated in FIG. 1.

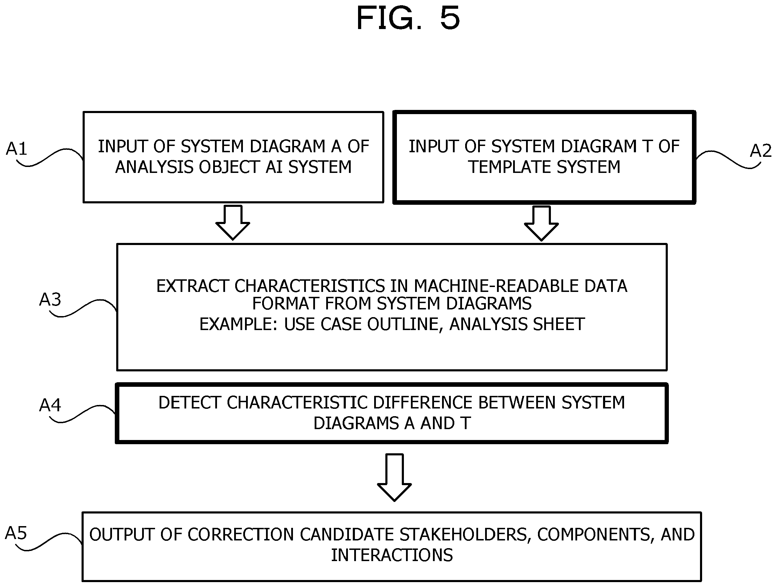

A characteristic difference detection process according to the embodiment will be briefly described with reference to the flowchart (steps A1 to A5) illustrated in FIG. 5.

The characteristic extraction unit 111 accepts an input of a system diagram A of the analysis object AI system 100 (see FIG. 1) (step A1) and also accepts an input of a system diagram T of a template system (step A2).

The characteristic extraction unit 111 extracts characteristics (for example, a use case outline or an analysis sheet) in a machine-readable data format from the system diagrams A and T (step A3).

The characteristic difference detection unit 112 detects a characteristic difference between the system diagrams A and T (step A4).

Then, the output unit 113 outputs correction candidate stakeholders, components, and interactions (step A5). Then, the characteristic difference detection process ends.

FIG. 6 (i.e., FIGs.6A and 6B) is a table illustrating the analysis sheet according to the embodiment.

The analysis sheet illustrated in FIG. 6 represents interactions performed between the stakeholders and between the stakeholders and the AI system, in a machine-readable format. In the analysis sheet, each row represents one interaction and indicates the types of the stakeholders or components at the start point and the end point of the one interaction.

For example, in the example illustrated in FIG. 6, the type "inference data acquisition source" of the interaction start point and the type "inference data source of provision" of the interaction end point are registered for the interaction identifier (ID) "S101". In addition, an outline of the interaction, an AI ethics feature, a risk event, a risk factor, and the like may be registered in the analysis sheet.

FIG. 7 is a table illustrating the use case outline according to the embodiment.

The use case outline illustrated in FIG. 7 represents data of stakeholders in a machine-readable format among items desired for analysis of the AI system 100. In the present embodiment, data is extracted by paying attention to information on a stakeholder important for AI ethical risk extraction.

For example, in FIG. 7, the medium category item "AI service provider" and the like are registered for the large category item "stakeholder and role". In addition, the contents corresponding to each medium category item may be registered in the use case outline.

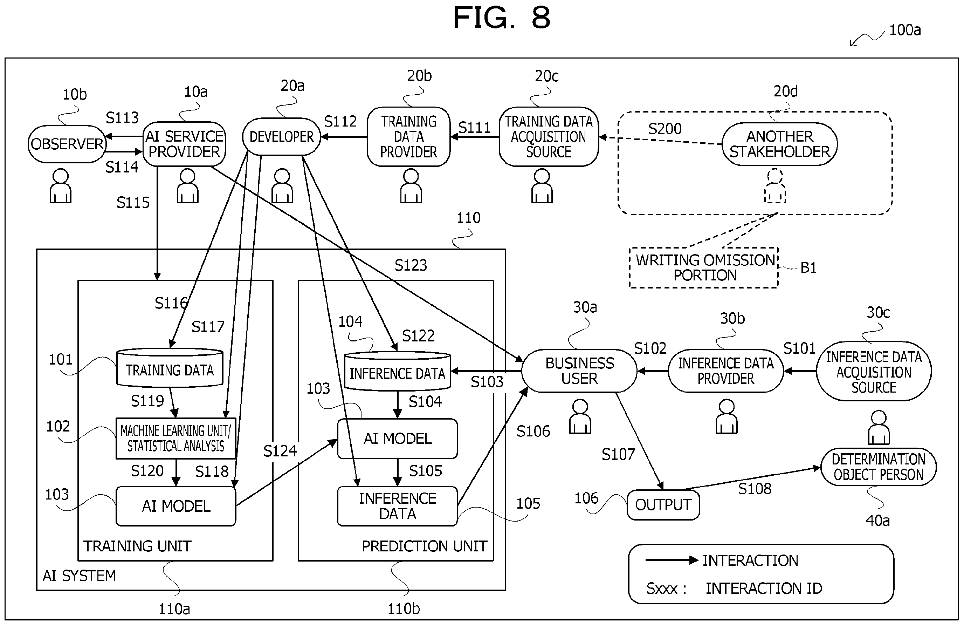

FIG. 8 is a block diagram illustrating a system diagram of an AI system 100a including a writing omission according to the embodiment.

FIG. 8 illustrates a system diagram manually created based on the template of the system diagram illustrated in FIG. 1. In the example illustrated in FIG. 8, as indicated by the reference sign B1, the another stakeholder 20d existing in the template illustrated in FIG. 1 is omitted in writing. In addition, the interaction S200 is also deleted due to the influence of the writing omission of the stakeholder.

The characteristic extraction unit 111 illustrated in FIG. 4 creates the use case outline and the analysis sheet from the system diagram of the AI system 100a illustrated in FIG. 8.

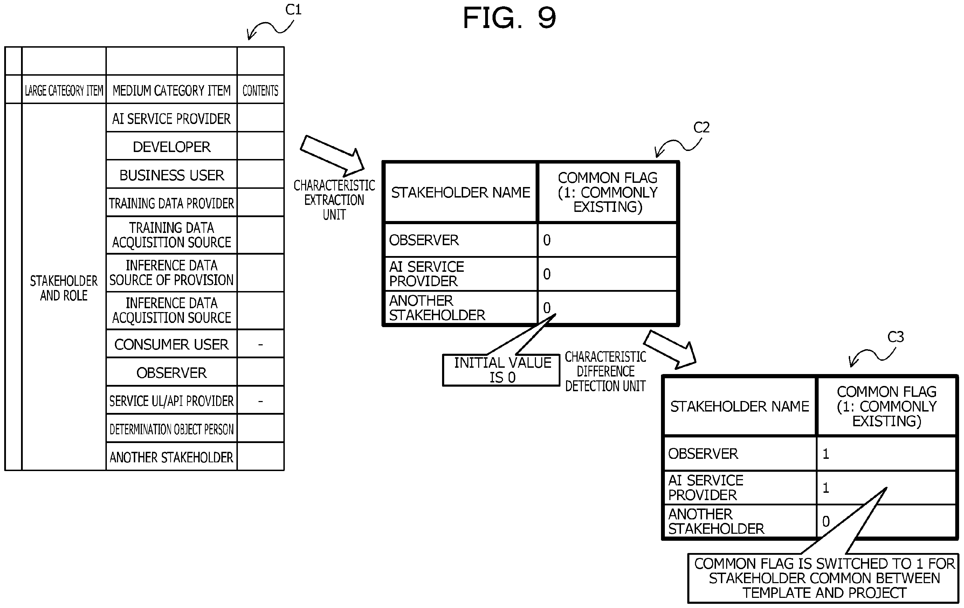

FIG. 9 is a diagram explaining a characteristic extraction process from the use case outline according to the embodiment.

The characteristic extraction unit 111 converts the use case outline of the input template indicated by the reference sign C1 into a stakeholder list in a machine-readable data format indicated by the reference sign C2 and treats the converted stakeholder list as an input to the characteristic difference detection unit 112. Note that the data format is common between the use case outline of the template and the embodiment (in other words, individual project creation).

In the machine-readable stakeholder list in an initial state indicated by the reference sign C2, a common flag "0" is set as an initial value for all stakeholder names.

In the machine-readable stakeholder list after the process indicated by the reference sign C3, the common flag has been set to "1" for the stakeholder name common between the template and the project by the characteristic difference detection unit 112 illustrated in FIG. 4.

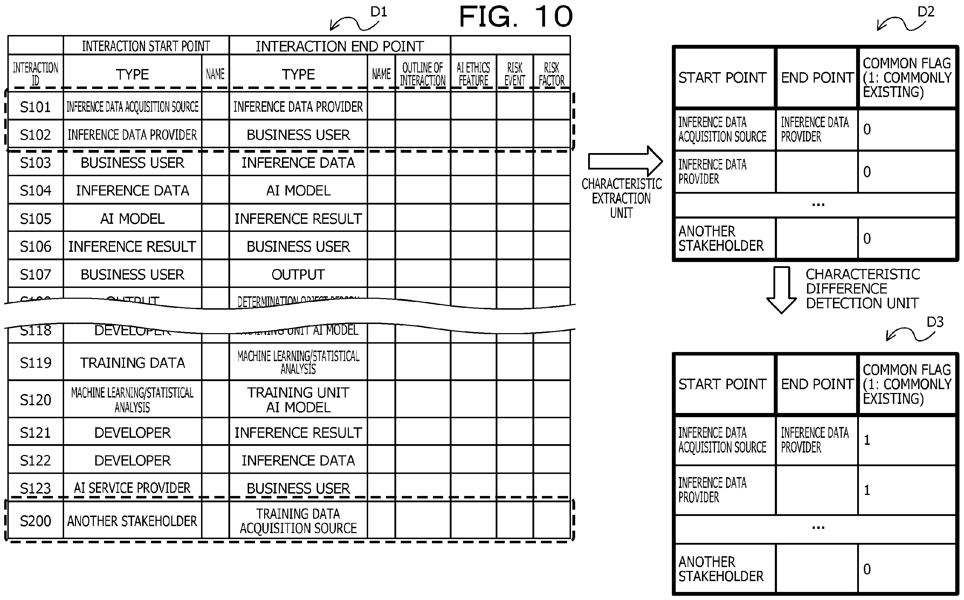

FIG. 10 is a diagram explaining the characteristic extraction process from the analysis sheet according to the embodiment.

As indicated by the reference sign D1, the analysis sheet of the template is converted into an interaction list in a machine-readable data format indicated by the reference sign D2 and is treated as an input to the characteristic difference detection unit 112. Note that the data format is common between the analysis sheet of the template and the embodiment (in other words, individual project creation).

In the machine-readable interaction list in an initial state indicated by the reference sign D2, a common flag "0" is set as an initial value for combinations of the start point and the end point of all interactions.

In the machine-readable interaction list after the process indicated by the reference sign D3, the common flag has been set to "1" for the interaction common between the template and the project by the characteristic difference detection unit 112 illustrated in FIG. 4.

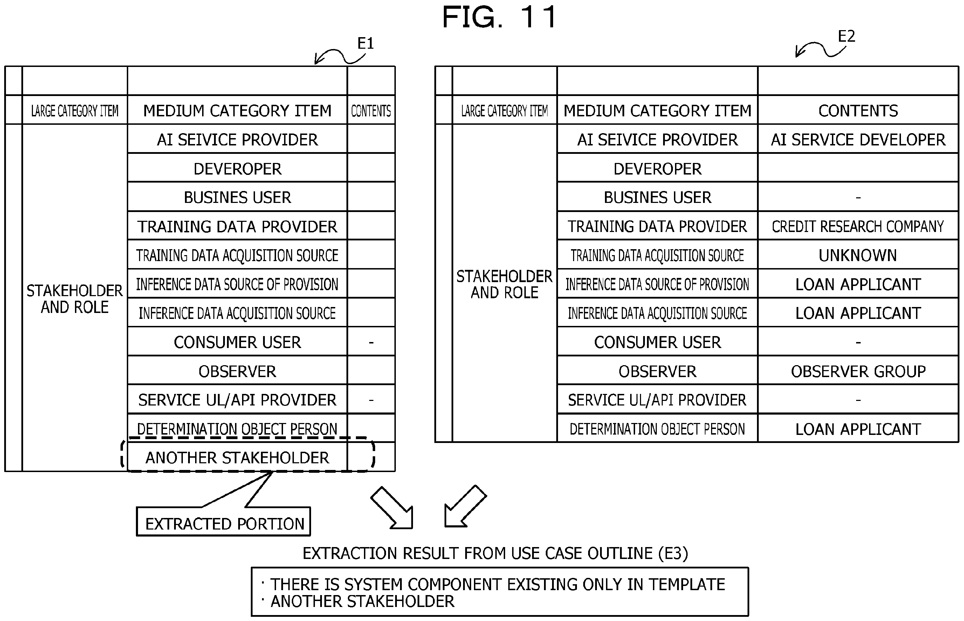

FIG. 11 is a diagram explaining an output process for the characteristic difference in the use case outline as the embodiment.

The characteristic difference detection unit 112 compares the stakeholder list (see the reference sign E1) of the template output from the characteristic extraction unit 111 with the stakeholder list (see the reference sign E2) of the embodiment and extracts a difference between the stakeholder lists. Then, the output unit 113 illustrated in FIG. 4 outputs the difference point as an extraction result from the use case outline as indicated by the reference sign E3.

In the example illustrated in FIG. 11, the output unit 113 may display, on a display device 131 (to be described later with reference to FIG. 24) of the information processing device 1, "there is a system component existing only in the template: another stakeholder".

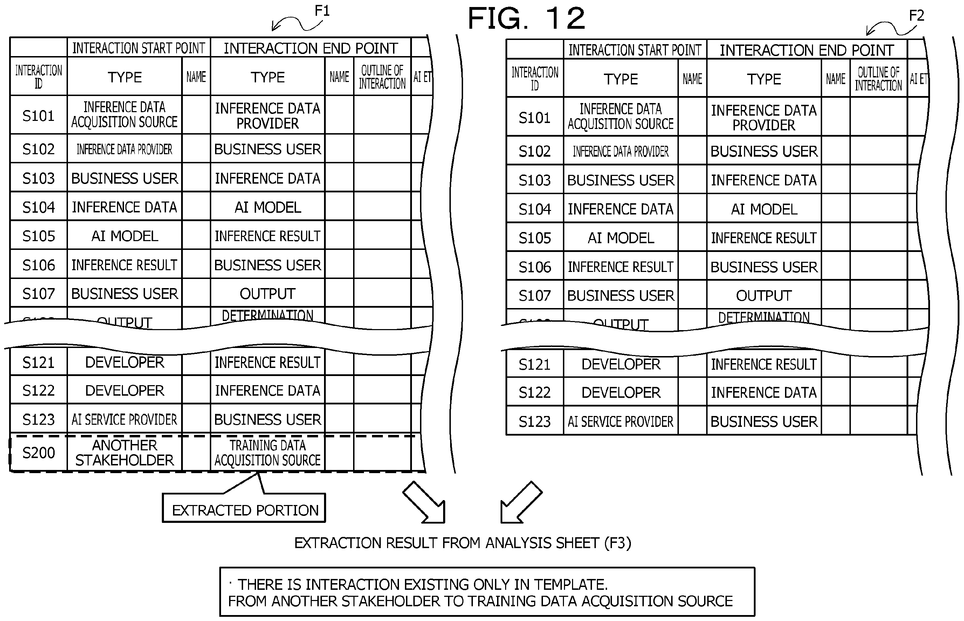

FIG. 12 is a diagram explaining an output process for a characteristic difference in the analysis sheet as the embodiment.

The characteristic difference detection unit 112 compares the analysis sheet (see the reference sign F1) included in the interaction set of the template output from the characteristic extraction unit 111 with the analysis sheet (see the reference sign F2) included in the interaction set of the embodiment and extracts a difference between the analysis sheets. Then, the output unit 113 illustrated in FIG. 4 outputs the difference point as an extraction result from the analysis sheet as indicated by the reference sign F3.

In the example illustrated in FIG. 12, the output unit 113 may display, on the display device 131 (to be described later with reference to FIG. 24) of the information processing device 1, "there is an interaction existing only in the template: from another stakeholder to training data acquisition source".

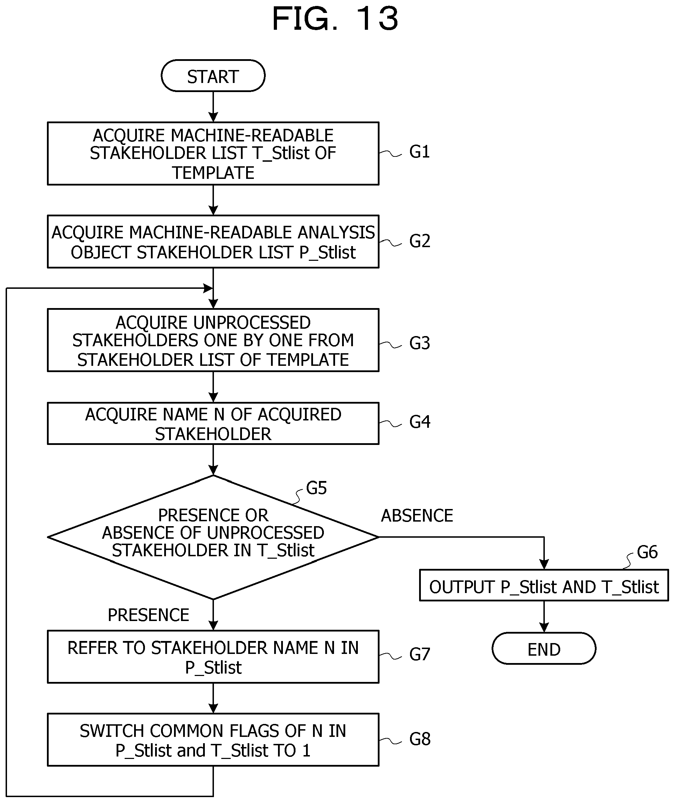

The characteristic extraction process in the stakeholder list as the embodiment will be described with reference to the flowchart (steps G1 to G8) illustrated in FIG. 13.

The characteristic extraction unit 111 acquires a stakeholder list T_Stlist from a machine-readable use case list of the template (step G1).

The characteristic extraction unit 111 acquires a machine-readable analysis object stakeholder list P_Stlist (step G2).

The characteristic difference detection unit 112 acquires unprocessed stakeholders one by one from the stakeholder list of the template (step G3).

The characteristic difference detection unit 112 acquires a stakeholder name N of the acquired stakeholder (step G4).

The characteristic difference detection unit 112 determines whether there is an unprocessed stakeholder in T_Stlist (step G5).

When there is no unprocessed stakeholder (see the absence route in step G5), the characteristic difference detection unit 112 outputs P_Stlist and T_Stlist (step G6). Then, the characteristic extraction process in the stakeholder list ends.

On the other hand, when there is an unprocessed stakeholder (see the presence route in step G5), the characteristic difference detection unit 112 refers to the stakeholder name N in P_Stlist (step G7).

The characteristic difference detection unit 112 switches the common flags of N in P_Stlist and T_Stlist to 1 (step G8). Then, the process returns to step G3.

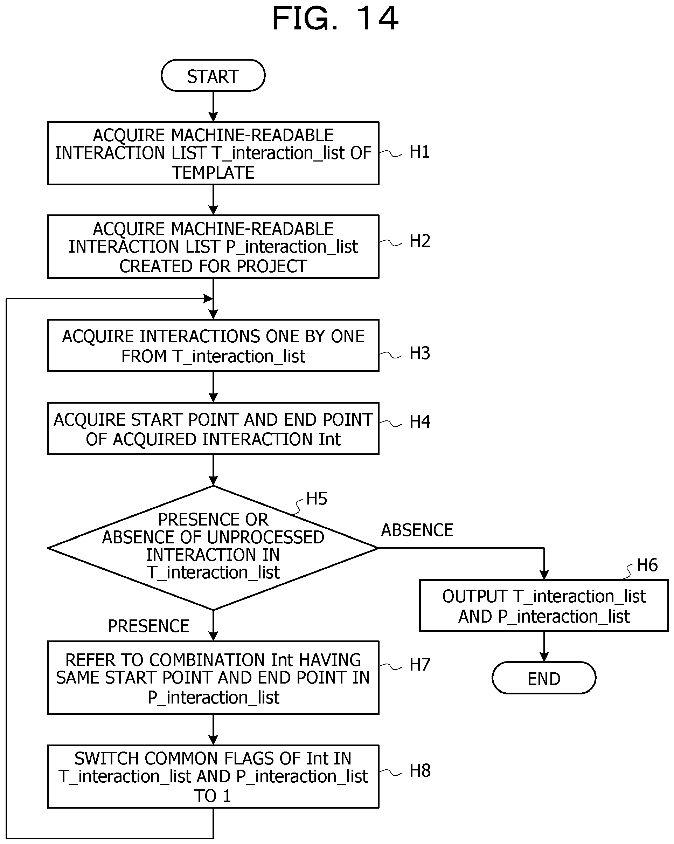

Next, the characteristic extraction process in the analysis sheet as the embodiment will be described with reference to the flowchart (steps H1 to H8) illustrated in FIG. 14.

The characteristic extraction unit 111 acquires a machine-readable interaction list T_interaction list of the template (step H1).

The characteristic extraction unit 111 acquires a machine-readable analysis object interaction list P_interaction_list (step H2).

The characteristic difference detection unit 112 acquires interactions one by one from the interaction list T_interaction_list (step H3).

The characteristic difference detection unit 112 acquires the start point and the end point of an acquired interaction Int (step H4).

The characteristic difference detection unit 112 determines whether there is an unprocessed interaction in T interaction_list (step H5).

When there is no unprocessed interaction (see the absence route in step H5), the characteristic difference detection unit 112 outputs the interaction lists T_interaction_list and P_interaction_list (step H6). Then, the characteristic extraction process in the analysis sheet ends.

On the other hand, when there is an unprocessed interaction (see the presence route in step H5), the characteristic difference detection unit 112 refers to a combination Int having the same start point and end point in P interaction list (step H7).

The characteristic difference detection unit 112 switches the common flags of Int in T_interaction list and P_interaction_list to 1 (step H8). Then, the process returns to step H3.

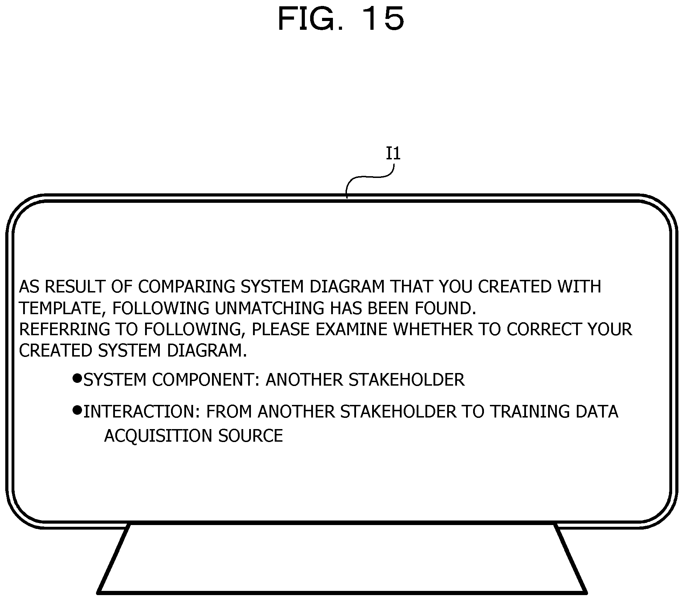

FIG. 15 is a diagram illustrating an output screen of a processing result according to the embodiment.

The output unit 113 outputs the difference from the template to a screen or a file for the user, based on the result of the characteristic difference detection unit 112. In the example indicated by the reference sign I1 in FIG. 15, the fact is displayed that unmatched points of "another stakeholder" in the system component and "from another stakeholder to training data acquisition source" in the interaction have been found.

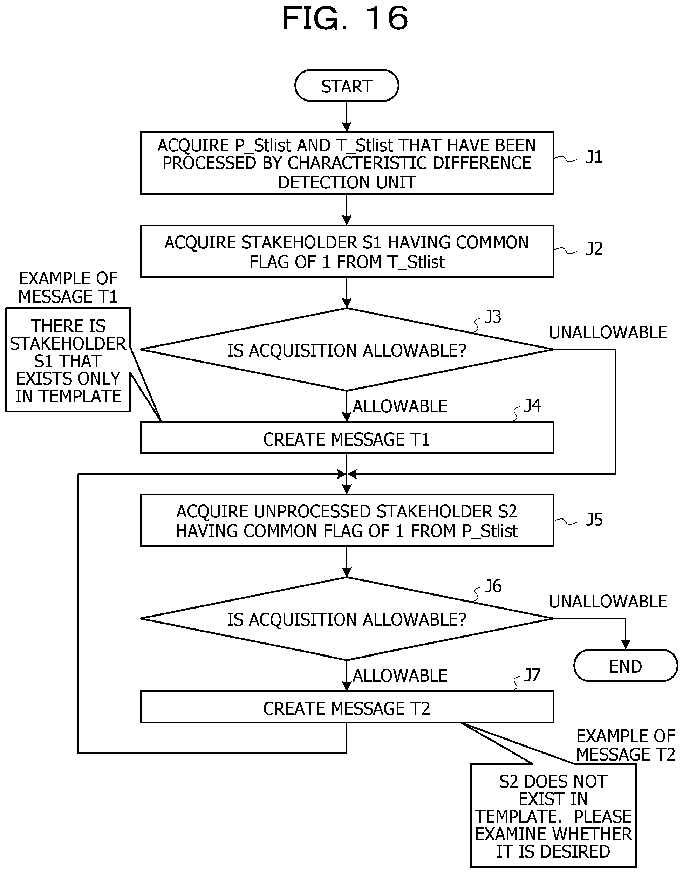

The output process for the stakeholder list as the embodiment will be described with reference to the flowchart (steps J1 to J7) illustrated in FIG. 16.

The output unit 113 acquires P_Stlist and T_Stlist that have been processed by the characteristic difference detection unit 112 (step J1).

The output unit 113 acquires a stakeholder S1 having the common flag of 1 from T_Stlist (step J2).

The output unit 113 determines whether the stakeholder S1 can be acquired (step J3).

When the acquisition is not allowable (see the unallowable route in step J3), the process proceeds to step J5.

On the other hand, when the acquisition is allowable (see the allowable route in step J3), the output unit 113 creates a message T1 (step J4). The message T1 is, for example, a message "there is a stakeholder S1 that exists only in the template.".

The output unit 113 acquires an unprocessed stakeholder S2 having the common flag of 1 from P_Stlist (step J5).

The output unit 113 determines whether the stakeholder S2 can be acquired (step J6).

When the acquisition is not allowable (see the unallowable route in step J6), the output process for the stakeholder list ends.

On the other hand, when the acquisition is allowable (see the allowable route in step J6), the output unit 113 creates a message T2. The message T2 may be, for example, a message "S2 does not exist in the template. Please examine whether it is desired.".

### [C] First Modification

In the system diagram, there is sometimes an undesired relationship between the component of the AI system and the stakeholder. In the present first modification, the generation of an excessive check item may be avoided when there is an undesired relationship between the component of the AI system and the stakeholder.

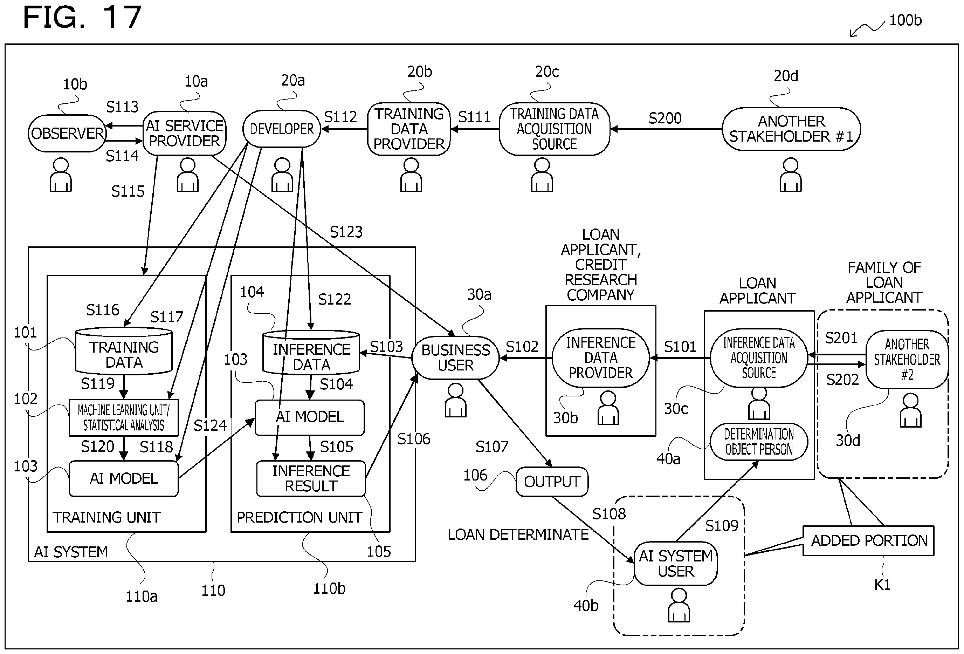

FIG. 17 is a block diagram illustrating a system diagram of an AI system 100b including additional writing according to the modification.

In the system diagram of the AI system 100b illustrated in FIG. 17, as indicated by the reference sign K1, another stakeholder 30d (another stakeholder #2) and an AI system user 40b have been added as compared with the system diagram of the AI system 100 illustrated in FIG. 1.

In addition, in the AI system 100b illustrated in FIG. 17, interactions S109, S201, and S202 have been added as compared with the AI system 100 illustrated in FIG. 1 due to the influence of the addition of the another stakeholder 30d and the AI system user 40b.

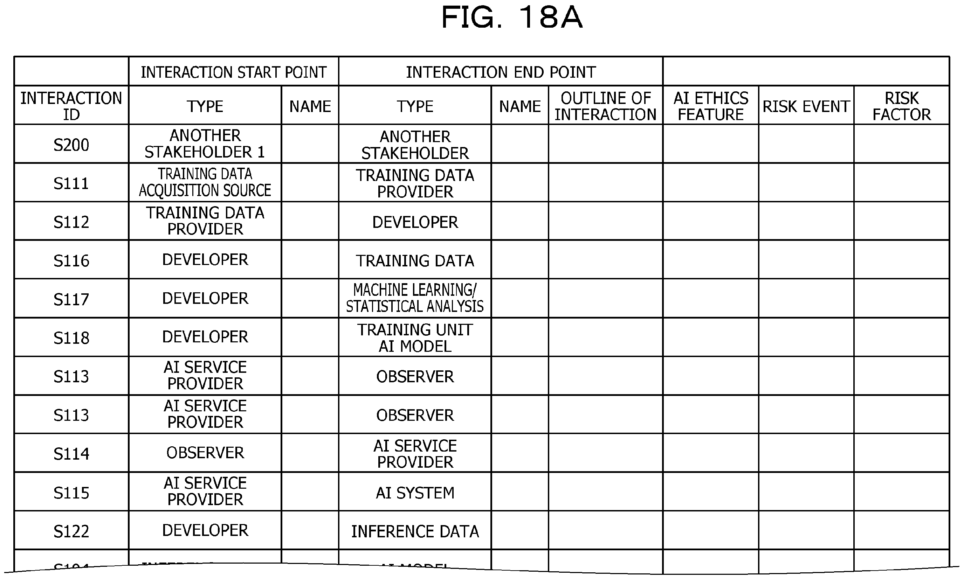

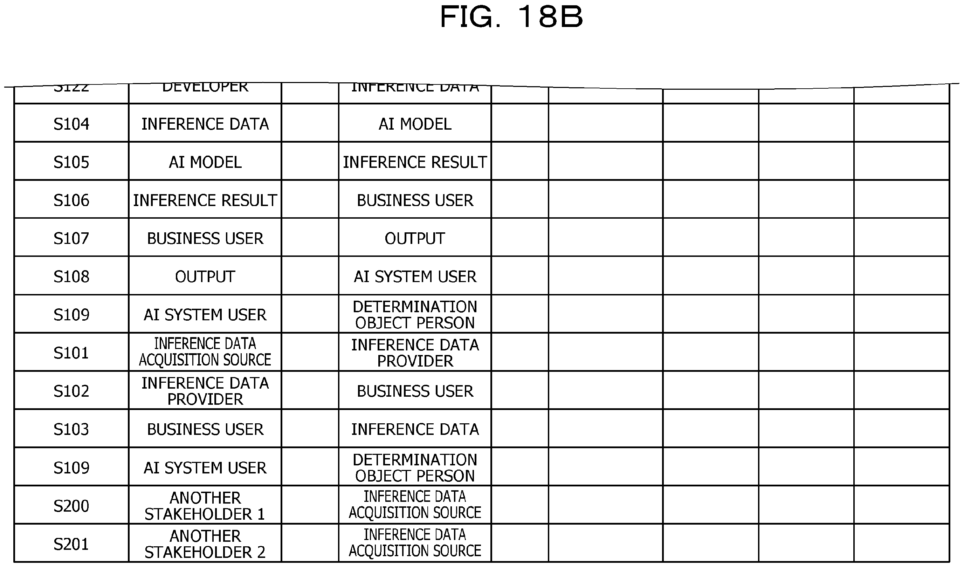

FIG. 18 (i.e., FIGs. 18A and 18B) is a table illustrating an analysis sheet according to the modification.

The analysis sheet illustrated in FIG. 18 is generated based on the interactions included in the system diagram of the AI system 100b illustrated in FIG. 17.

As compared with the analysis sheet illustrated in FIG. 6, the analysis sheet illustrated in FIG. 18 includes the interaction S109 from the AI system user 40b to the determination object person 40a, the interaction S201 from the another stakeholder 30d to the inference data acquisition source 30c, and the interaction S202 from the inference data acquisition source 30c to the another stakeholder 30d.

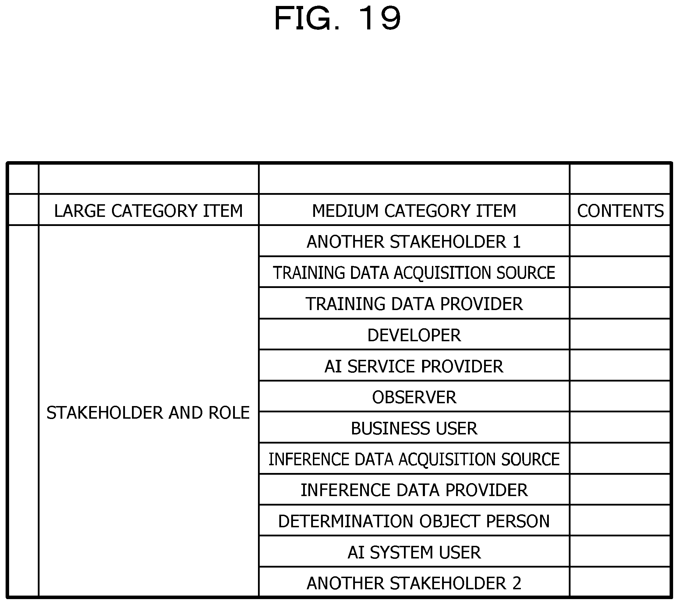

FIG. 19 is a table illustrating a use case outline according to the modification.

The use case outline illustrated in FIG. 19 is generated based on the stakeholders included in the system diagram of the AI system 100b illustrated in FIG. 17.

The use case outline illustrated in FIG. 19 includes "AI system user" and "another stakeholder #2" as compared with the use case outline illustrated in FIG. 7.

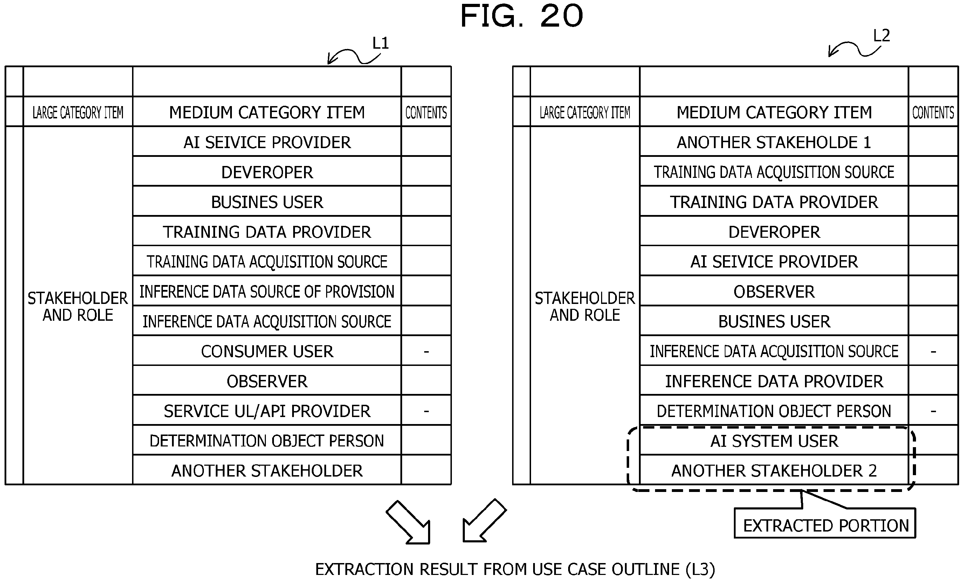

FIG. 20 is a diagram explaining an output process for a characteristic difference in the use case outline as the modification.

The characteristic difference detection unit 112 compares the stakeholder list (see the reference sign L1) of the template output from the characteristic extraction unit 111 with the stakeholder list (see the reference sign L2) of the modification and extracts a difference between the stakeholder lists. Then, the output unit 113 outputs the difference point as an extraction result from the use case outline as indicated by the reference sign L3.

In the example illustrated in FIG. 20, the output unit 113 may display, on the display device 131 (to be described later with reference to FIG. 24) of the information processing device 1, "AI system user and another stakeholder #2" as components that do not exist in the template.

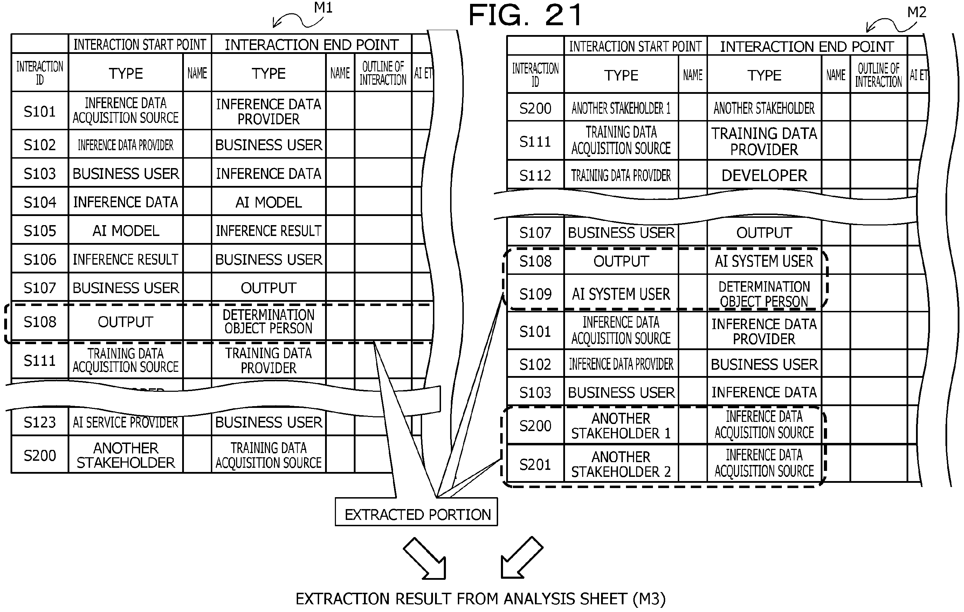

FIG. 21 is a diagram explaining an output process for a characteristic difference in the analysis sheet as the modification.

The characteristic difference detection unit 112 compares the analysis sheet (see the reference sign M1) included in the interaction set of the template been output from the characteristic extraction unit 111 with the analysis sheet (see the reference sign M2) included in the interaction set of the modification and extracts a difference between the analysis sheets. Then, the output unit 113 outputs the difference point as an extraction result from the analysis sheet as indicated by the reference sign M3.

In the example illustrated in FIG. 21, the output unit 113 may display, on the display device 131 (to be described later with reference to FIG. 24) of the information processing device 1, "from another stakeholder #2 to inference data acquisition source, from inference data acquisition source to another stakeholder #2, from output to AI system user" as interactions that do not exist in the template, and "from output to determination object person" as an interaction that exists only in the template.

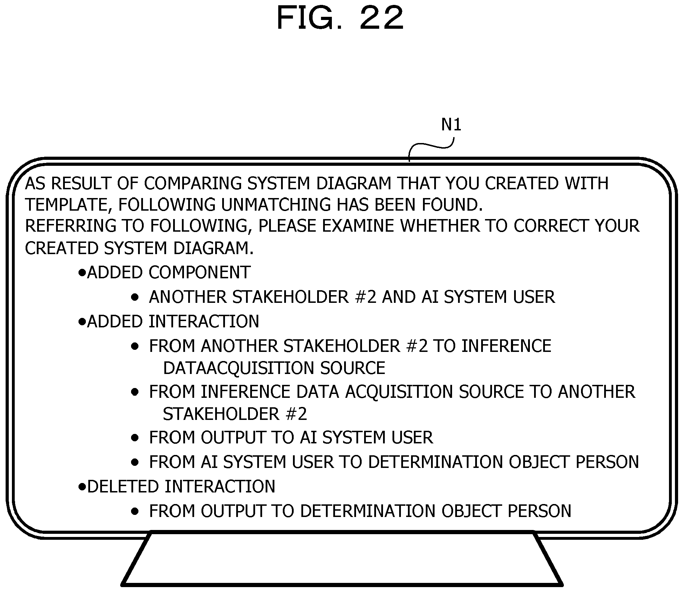

FIG. 22 is a diagram illustrating an output screen of a processing result according to the modification.

The output unit 113 outputs the difference from the template to a screen or a file for the user, based on the result of the characteristic difference detection unit 112. In the example indicated by the reference sign N1 in FIG. 22, the fact is displayed that "another stakeholder #2 and AI system user" have been found as the added components. In addition, the fact is displayed that "from another stakeholder #2 to inference data acquisition source, from inference data acquisition source to another stakeholder #2, from output to AI system user, from AI system user to determination object person" have been found as the added interactions. Furthermore, it is indicated that "from output to determination object person" has been found as the deleted interaction.

### [D] Second Modification

In the embodiment and the first modification described above, the creator of the analysis object system diagram selects the template, but the template may be automatically chosen.

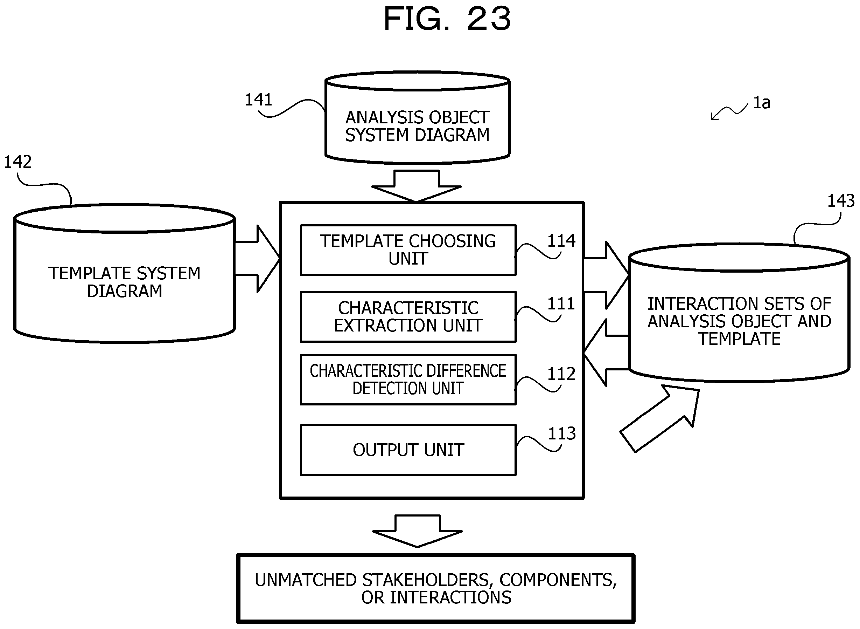

FIG. 23 is a block diagram schematically illustrating a software configuration example of an information processing device 1a according to a second modification.

As compared with the information processing device 1 illustrated in FIG. 4, the information processing device 1a illustrated in FIG. 23 further includes a template choosing unit 114 that selects an appropriate system diagram from among a plurality of (in other words, two or more) template system diagrams 142.

The template choosing unit 114 confirms, in the analysis object system diagram, the presence or absence of an interaction between the "inference result" that is an output result of the AI model and the "business user" that is a person belonging to the business side.

When there is the interaction, the template choosing unit 114 assigns only the template having such an interaction as a candidate for the system diagram to be selected.

The template choosing unit 114 creates a document in which names of nodes in the system diagram of the template assigned as a candidate are collected, for each template. The template choosing unit 114 similarly creates a document in which names of nodes in the analysis object system diagram are collected.

The template choosing unit 114 calculates similarity (for example, cos similarity) between documents created from each template and the analysis object system. Then, the template choosing unit 114 chooses a template having the highest similarity with the analysis object system diagram.

### [E] Third Modification

In the embodiment and the first modification, the output unit 113 outputs the difference between the analysis object system diagram and the template system diagram to the screen, but the difference may be semi-automatically reflected in the analysis object system diagram.

When outputting the difference between the analysis object system diagram and the template system diagram on the screen, the output unit 113 inquires of an operator whether to reflect this difference in the analysis object system diagram.

The output unit 113 alters the analysis object system diagram when acquiring an answer to reflect, from the operator.

When there are missing stakeholders and interactions, the output unit 113 adds the missing stakeholders to the machine-readable stakeholder list and also adds the missing interactions to the machine-readable interaction list.

When there is excessive stakeholders or interactions, the output unit 113 deletes the excessive stakeholders from the machine-readable stakeholder list and also deletes the excessive interactions from the machine-readable interaction list.

The output unit 113 draws a system diagram using a graph drawing technique (for example, Graphviz), using the updated stakeholder list and interaction list.

### [F] Hardware Configuration Example

FIG. 24 is a block diagram schematically illustrating a hardware configuration example of the information processing devices 1 and 1a according to the embodiment and each of the modifications.

As illustrated in FIG. 24, the information processing devices 1 and 1a includes a central processing unit (CPU) 11, a memory unit 12, a display control unit 13, a storage device 14, an input interface (IF) 15, an external recording medium processing unit 16, and a communication IF 17.

The memory unit 12 is an example of a storage unit and illustratively, includes a read only memory (ROM), a random access memory (RAM), and the like. Programs such as a basic input/output system (BIOS) may be written in the ROM of the memory unit 12. A software program in the memory unit 12 may be read and executed by the CPU 11 as appropriate. In addition, the RAM of the memory unit 12 may be used as a temporary recording memory or a working memory.

The display control unit 13 is coupled to a display device 131 and controls the display device 131. The display device 131 is a liquid crystal display, an organic light-emitting diode (OLED) display, a cathode ray tube (CRT), an electronic paper display, or the like and displays various types of information for an operator or the like. The display device 131 may be combined with an input device and may be, for example, a touch panel. The display device 131 displays various types of information for a user of the information processing devices 1 and 1a.

The storage device 14 is a storage device having high input/output (IO) performance, and for example, a dynamic random access memory (DRAM), a solid state drive (SSD), a storage class memory (SCM), and a hard disk drive (HDD) may be used.

The input IF 15 may be coupled to an input device such as a mouse 151 or a keyboard 152 and may control the input device such as the mouse 151 or the keyboard 152. The mouse 151 and the keyboard 152 are examples of the input devices, and an operator performs various types of input operations via these input devices.

The external recording medium processing unit 16 is configured in such a manner that a recording medium 160 can be attached to the external recording medium processing unit 16. The external recording medium processing unit 16 is configured in such a manner that information recorded in the recording medium 160 can be read in a state with the recording medium 160 attached. In the present example, the recording medium 160 is portable. For example, the recording medium 160 is a flexible disk, an optical disc, a magnetic disk, a magneto-optical disk, a semiconductor memory, or the like.

The communication IF 17 is an interface for enabling communication with an external device.

The CPU 11 is an example of a processor and is a processing device that performs various controls and arithmetic operations. The CPU 11 achieves various functions by executing an operating system (OS) or a program read into the memory unit 12. Note that the CPU 11 may be a multiprocessor including a plurality of CPUs, or a multi-core processor having a plurality of CPU cores, or may have a configuration having a plurality of multi-core processors.

A device for controlling operation of the entire information processing devices 1 and 1a is not limited to the CPU 11 and may be, for example, any one of an MPU, a DSP, an ASIC, a PLD, or an FPGA. In addition, the device for controlling operation of the entire information processing devices 1 and 1a may be a combination of two or more types of the CPU, MPU, DSP, ASIC, PLD, and FPGA. Note that the MPU is an abbreviation for a micro processing unit, the DSP is an abbreviation for a digital signal processor, and the ASIC is an abbreviation for an application specific integrated circuit. In addition, the PLD is an abbreviation for a programmable logic device, and the FPGA is an abbreviation for a field programmable gate array.

### [G] Effects

According to the AI system check program, the AI system check method, and the information processing device 1 according to the above-described embodiments, for example, the following actions and effects may be obtained.

The characteristic extraction unit 111 specifies a first plurality of sets of stakeholders that have relationships with each other, based on the configuration of the stakeholders of the AI system 100. The characteristic difference detection unit 112 compares the first plurality of sets with a second plurality of sets of stakeholders determined based on the configuration of the stakeholders of another AI system 100a. The output unit 113 outputs a first set included in the first plurality of sets but not included in the second plurality of sets, as difference information, based on the result of the comparison process.

This may refine the accuracy and may improve the efficiency in a risk analysis work by refining the accuracy of the system diagram of the AI system. Specifically, an omission in the relationship between the components of the AI system 100a and the stakeholders may be detected, and an omission produced in the generated check items may be avoided.

The output unit 113 further outputs a second set included in the second plurality of sets but not included in the first plurality of sets, as the difference information, based on the result of the comparison process.

This may avoid generation of an excessive check item by detecting an undesired relationship between the component of the AI system 100a and the stakeholder.

The first plurality of sets is determined based on the configuration of the stakeholders of the AI system 100 as a template, and the second plurality of sets is determined based on the configuration of the stakeholders of the another AI system 100a as a project.

This may avoid an omission arising in the another AI system 100a as a project, based on the system diagram of the AI system 100 as a template.

The template choosing unit 114 chooses one set of the first plurality of sets from among two or more sets of the first plurality of sets, based on similarity between a document about the two or more sets of the first plurality of sets included in the AI system 100 and the document included in the another AI system 100a.

This may enable to choose the AI system 100 as a template suitable for the another AI system 100a.

The output unit 113 reflects the difference information in the another AI system 100a.

This may reduce the work person-hours of the operator because the difference information can be automatically reflected in the another AI system 100a.

### [H] Others

The disclosed technique is not limited to the above-described embodiments, and various modifications can be made and carried out in a range without departing from the spirit of the present embodiments. Each configuration and each process of the present embodiments may be selected or omitted as desired, or may be combined as appropriate.

## Claims

1. An artificial intelligence (AI) system check program comprising instructions which when executed by a computer, cause the computer to execute processing comprising:
specifying a first plurality of sets of stakeholders that have relationships with each other, based on a configuration of the stakeholders of an AI system;
comparing the first plurality of sets with a second plurality of sets of stakeholders determined based on the configuration of the stakeholders of another AI system; and
outputting a first set included in the first plurality of sets but not included in the second plurality of sets, as difference information, based on a result of the comparing.

2. The AI system check program according to claim 1, the processing further comprising:
outputting a second set included in the second plurality of sets but not included in the first plurality of sets, as the difference information, based on the result of the comparing.

3. The AI system check program according to claim 1 or 2, wherein
the first plurality of sets is determined based on the configuration of the stakeholders of the AI system as a template, and
the second plurality of sets is determined based on the configuration of the stakeholders of the another AI system as a project.

4. The AI system check program according to claim 1 or 2, the processing further comprising:
choosing one set of the first plurality of sets from among two or more sets of the first plurality of sets, based on similarity between a document about the two or more sets of the first plurality of sets included in the AI system and the document included in the another AI system.

5. The AI system check program according to claim 1 or 2, the processing further comprising:
reflecting the difference information in the another AI system.

6. An artificial intelligence (AI) system check method implemented by a computer, the method comprising:
specifying a first plurality of sets of stakeholders that have relationships with each other, based on a configuration of the stakeholders of an AI system;
comparing the first plurality of sets with a second plurality of sets of stakeholders determined based on the configuration of the stakeholders of another AI system; and
outputting a first set included in the first plurality of sets but not included in the second plurality of sets, as difference information, based on a result of the comparing.

7. An information processing apparatus comprising a processor configured to perform processing including:
specifying a first plurality of sets of stakeholders that have relationships with each other, based on a configuration of the stakeholders of an artificial intelligence (AI) system;
comparing the first plurality of sets with a second plurality of sets of stakeholders determined based on the configuration of the stakeholders of another AI system; and
outputting a first set included in the first plurality of sets but not included in the second plurality of sets, as difference information, based on a result of the comparing.
